Europäisches Patentamt

European Patent Office

Office européen des brevets

(11) Publication number: **0 475 501 A1**

# EUROPEAN PATENT APPLICATION

(21) Application number: **91202207.6**

(22) Date of filing: **30.08.91**

(51) Int. Cl.5: **B62B 3/00**

(30) Priority: **04.09.90 NL 9001937**

(43) Date of publication of application:
**18.03.92 Bulletin 92/12**

(84) Designated Contracting States:
**AT BE CH DE DK ES FR GB GR IT LI LU NL SE**

(71) Applicant: **KARSTEN METAAL B.V.**
**85, Beneden Verlaat**
**NL-9645 BM Veendam(NL)**

(72) Inventor: **Kempers, Paulus Gijsbertus**
**De Meent 21**
**NL-8061 BT Hasselt(NL)**

(74) Representative: **Morel, Christiaan F., Ir.Dr.**
**MORELPATENT, Postbus 10482**
**NL-7301 GL Apeldoorn(NL)**

(54) **Roller container of the nestable A-frame container type.**

(57) Roller container of the nestable A-frame container type, provided with a bottom frame in the shape of a forward tapering isosceles trapezium, placed on four wheels (3, 4), on the bottom frame (2) a vertical frame is placed, comprising a fixed rear wall (5) having on either side at right angles thereto a narrow wall (6, 7) which is also fixed, a left (6) and a right narrow wall (7), to which both left and right narrow wall a second broader side wall (9, 10), a left (9) and a right hinged side wall (10), pivoting about a vertical axis, is fixed. Means are present for supporting the hinged side wall parts (9, 10) near the front side when they are in the flapped out position. The supporting means consist the preference of a support (14) which can be pulled out at the side near the front side of the tapering bottom frame. The slides (14) are provided near the ends with means, such as a raised lip (16) or a stop boss, which serve to permit swinging of the side walls up to a desired swing outwards.

Fig: 3

The invention relates to a roller container of the nestable A-frame container type, provided with a bottom frame in the shape of a forward tapering isosceles trapezium, placed on four wheels, each placed near one of the corners of the isosceles trapezium, on which bottom frame a vertical frame is placed, comprising a fixed rear wall having on either side at right angles thereto a narrow wall which is also fixed, a left and a right narrow wall, to which both left and right narrow wall a second broader side wall, a left and a right hinged side wall, pivoting about a vertical axis, is fixed.

Such a roller container has been in general use for quite a long time now and is known from the U.S. patent 3,840,242. In the case of this known roller container it is possible to store a number of roller containers as compactly as possible when they are empty and not in use. For this purpose, the bottom side of the rear wall is open, making it possible when the side walls are flapped-in for the A-type frame of a roller container to be pushed under the rear wall inside the A-frame of the preceding roller container. This so-called "nesting" of roller containers, i.e. storing several roller containers as compactly as possible, means that storage space is gained when the containers are not in use. When the roller containers are stored nested, the side walls are collapsed against the rear wall into a position which is as compact as possible, and the bottom panel, if present, is flapped up. If the roller container is equipped with a front door, for the nesting the latter first turns against a part of the pivoted side wall, and it can then be taken together with said side wall into the nested position.

The roller container of the nestable A-frame container type has the disadvantage that when the side walls are flapped out and the bottom is down, the pivoted side walls then have no sufficient support. When such roller containers are moved, vertical forces can be exerted on the side walls. The bottom shelf supports the side walls but the pivoted or flap-out side walls are subjected to downward forces, particularly if such a roller container is pulled over an obstacle such as a kerb or a doorstep. In manoeuvres in which a roller container is wheeled first on the two rear wheels and then let go so that it can return to the normal position on four wheels, and in the process falls onto the two front wheels, very great forces can be exerted on the two pivoted side walls and then on the bottom shelf. As a result of the great forces then occurring, the bottom shelf can be pulled crooked, the rear bridge deformed, the side walls pressed diagonally out of true, the rear wall pressed forward, or even the connection between the side walls and the bottom panel completely broken. Great forces can also occur on the hinges connecting the hinged side walls, as a result of which breakage can occur at the hinges.

The object of the invention is a roller container of the above-mentioned type which can be wheeled or manoeuvred over, for example, doorsteps and kerbs even when heavily loaded, without the roller container being pressed out of alignment.

This object is achieved with a roller container according to the invention in that means are present for supporting the hinged side walls near the front side when they are in the flapped-out position and are positioned approximately in line with the narrow side walls parts.

A first possible embodiment of the roller container according to the invention is characterised in that a support which can be pulled out at the side is provided near the front side of the tapering bottom frame. In the case of such an embodiment of the roller container according to the invention, each outward turning side wall is supported only near the front side. This is already sufficient for many applications. Such a design is much cheaper and stronger than the embodiment, described in US patent 3,840,242 as the bottom frame is much stronger and better supported by the wheels than the bottom shelf which makes that if the pivoted side walls, which supports the other shelves, will also be much better supported.

In a preferred embodiment according to the invention the support is in two parts, each part being accommodated in the front tubular bar of the bottom frame, which parts can be slid sideways over a particular maximum distance, one to the left and one to the right side and the slides are provided near the ends with means, such as a raised lip or a stop boss, which serve to permit swinging of the side walls up to a desired swing outwards. The great advantage of this embodiment is, that if the pivoting side walls are pivoted outwardly, automatically the supporting parts will be pushed outwardly to the desired outer position. When the roller container is empty and the side walls are folded towards the back wall, then automatically both supporting parts will be pushed inwardly into the front tubular bar if the roller container is pushed from the backside into another roller container.

The invention will be explained in greater detail with reference to the drawing. In the drawing:

Fig. 1 shows a perspective view of a roller container with shelving;

Fig. 2 shows a perspective view of three roller containers in the nested position;

Fig. 3 shows a perspective view of the bottom part of a roller container according to a first possible embodiment of the invention;

Fig. 4 shows a perspective view of the bottom part of a roller container in a second possible embodiment of the invention;

Fig. 5 shows a perspective view of the bottom side of a roller container according to a third possible embodiment of the invention;

Fig. 6 shows schematically a top view of two roller containers, one placed inside the other.

It can be seen from the figures that a roller container 1 is made up of a bottom frame 2 made of tubular bars, said frame in top view being the shape of a forward tapering isosceles trapezium. The wheels are provided on the corners of the isosceles trapezium, two front wheels 3 (generally castors), and two rear wheels 4, each wheel placed near one of the corners. A fixed rear wall 5 is placed on the bottom frame 2 at the rear side, said wall having at both sides thereof at right angles thereto a fixed side wall 6, 7. Broader side walls 9 and 10 are hingedly fixed by means of hinges 8 to each of the two side walls 6 and 7. The narrow side walls 6 and 7 are not the same width, nor are the pivoted side walls 9 and 10.

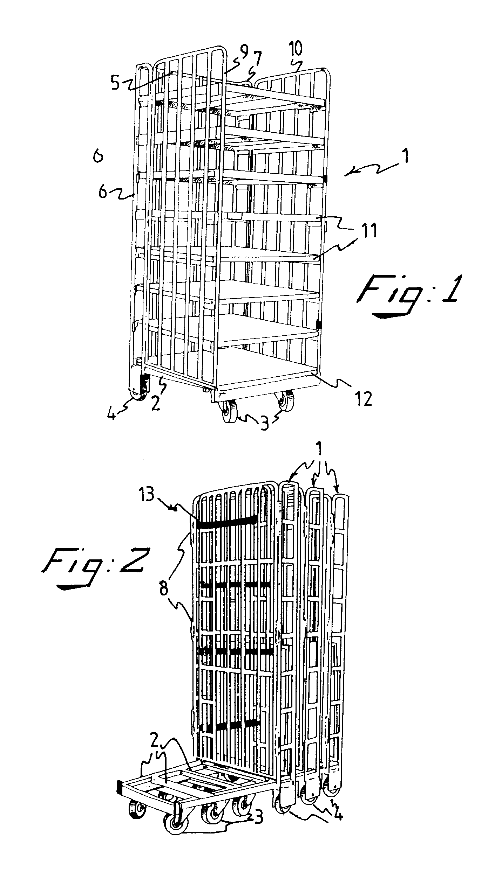

Figure 1 shows a roller container in the position ready for use, in which shelves 11 are placed between the side walls and a bottom shelf 12 at the bottom. Goods could be placed on the bottom shelf or 12 and on the shelves 11.

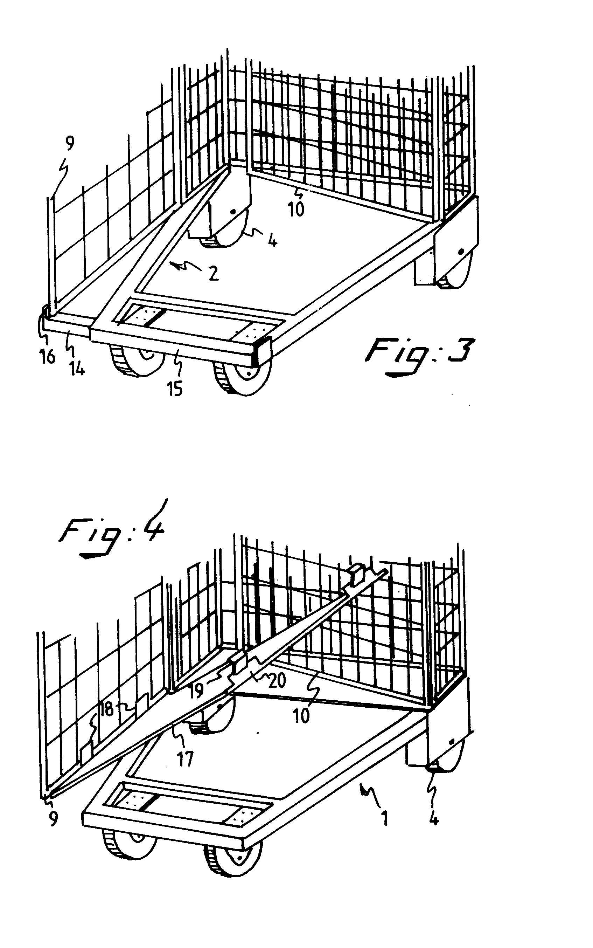

Figure 2 shows three roller containers 1, whose side walls 6, 7 are flapped inwards and the roller containers wheeled into one another in the nested position. The front side of the trapezium-shaped bottom frame 2, or the nose of each roller container, can be wheeled under the rear bridge under the rear wall 5 of each preceding container. The inward flapped hinged wall parts 9, 10 can be held in the flapped-in position by means of clamping devices 13.

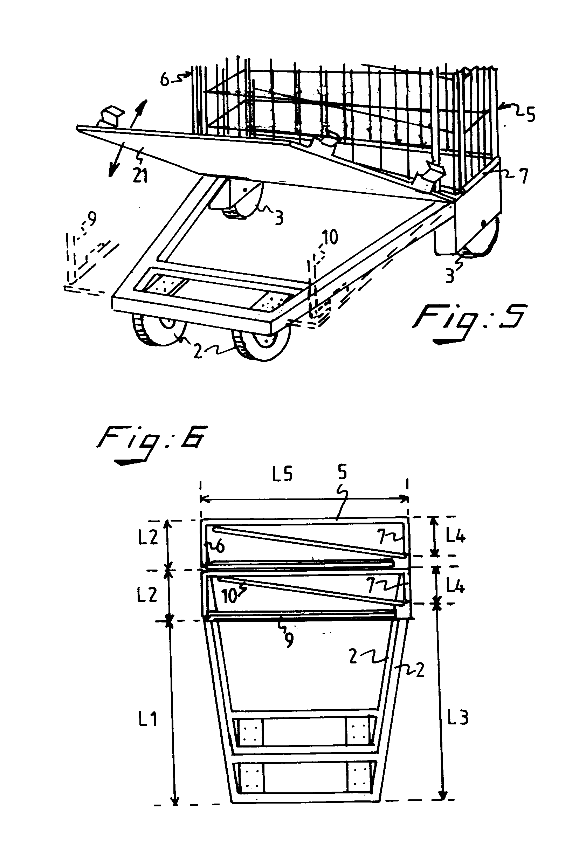

Figure 3 shows in greater detail a part of a roller container according to the invention, provided with devices which support said hinged side wall parts 9, 10 near the front side when they are in the flapped- out position and are placed approximately in line with the narrow side walls 6, 7. The means in this embodiment comprise supporting means which can be pulled out at the side near the front side of the tapering bottom frame, which supporting means are in two parts 14, each part 14 being accommodated in the front tubular bar 15 of the bottom frame 2. The two supporting parts 14 can be pushed outward over a certain maximum distance, and are provided near the ends with a raised lip 16 which serves as a stop boss for the hinged side wall parts. This means that the side wall parts 9, 10 cannot swing outwards any further than to a position in which the two hinged side wall parts lie approximately in line with the two narrow side wall parts 6, 7. The slides are preferably made in such a way that when the hinged side wall parts 9, 10 swing outwards the supporting parts 14 are pulled automatically into the outer position. When the roller containers are placed inside one another, the supporting parts 14 will automatically be pressed into the front tubular bar 15, through the fact that the inside of the A-shaped frame serves as a guide. In such a roller container all the shelves used including the bottom shelf are to be identical to each other.

Figure 4 shows another possible embodiment of a roller container according to the invention, provided with supporting means. In this embodiment the supporting means comprise an approximately rectangular bottom panel 17, of which one of the sides is fixed near the bottom side of the smaller of the hinged side walls 9 so that it pivots about a horizontal axis by means of hinges 18. In order to place such a roller container in the nested position, the hinged wall part 10 first has to be flapped inwards, the bottom 17 then flapped up against the side wall part 9, and finally the side wall part 9 together with the bottom panel 17 flapped inwards. For placing nested roller containers in the position ready for use, the side wall part 9 is first turned outwards, the bottom panel 17 is then flapped down, and the hinged side wall part 10 can then be turned outwards, in which case the hinged side wall 10 is automatically placed in the outer position and fixed to the bottom with the aid of hook-shaped parts 19 and a stop boss 20. If this embodiment is used in combination with the sideways sliding parts 14 as described in figure 3, an extremely strong roller container will be obtained.

Fig. 5 shows yet another possible embodiment of a roller container. In this embodiment the bottom panel is hingedly fixed to the frame 2. The bottom panel is provided on either side with two stop bosses 20 and clamping means 19, which serve to hold the hinged side wall parts in the outward turned position. In order to place such a roller container in the working position, the bottom panel 21 first has to be flapped down, and the side wall parts 9 and 10 then have to be turned outwards, during which process they are turned outwards against the respective stop bosses, while the clamping means ensure that the side wall parts 9, 10 remain in that outer position. For flapping into the position in which the roller container is placed in the nested position, the two hinged side wall parts 9, 10 first have to be flapped inwards, and the bottom panel 21 then has to be flapped up, while the fixing means for fixing the two hinged wall parts in the outer position can also serve to hold the bottom panel in the flapped-up position.

Figure 6 shows a top view of two roller containers 1 placed in the nested position. The proportions of the width of each of the side wall parts of a roller container can be seen to some extent from this figure. The width of the side wall part 6 is L2, that of the side wall part 7 L4, that of the rear wall 5 L5, the width of the hinged left side wall part is L1, and that of the hinged right side wall part is L3. The sum of the lengths of L1 and L2 is then equal or approximately equal to the sum of L3 and L4, while it is generally true that the width of the left hinged side wall part 9 is smaller than that of the right hinged side wall part 10, and that the width of the right narrow side wall part 7 is smaller than the width of the left fixed side wall part 6, while the width of the right hinged side wall part 10 must be smaller than the width of the rear wall part 5.

## Claims

1. Roller container of the nestable A-frame container type, provided with a bottom frame in the shape of a forward tapering isosceles trapezium, placed on four wheels (3, 4), one of the four wheels placed near one of the corners of the isosceles trapezium, on which bottom frame (2) a vertical frame is placed, comprising a fixed rear wall (5) having on either side at right angles thereto a narrow wall (6, 7) which is also fixed, a left (6) and a right narrow wall (7), to which both left and right narrow wall a second broader side wall (9, 10), a left (9) and a right hinged side wall (10), pivoting about a vertical axis, is fixed,
**characterised in that** means are present for supporting the hinged side wall parts (9, 10) near the front side when they are in the flapped out position and are positioned approximately in line with the narrow side wall parts (6, 7).

2. Roller container according to claim 1, **characterised in that** a support (14) which can be pulled out at the side is provided near the front side of the tapering bottom frame.

3. Roller container according to claim 2, **characterised in that** the support is in two parts (14), each part being accommodated in the front tubular bar (15) of the bottom frame (2), which parts can be slid sideways over a particular maximum distance, one to the left and one to the right side.

4. Roller container according to any of claims 2 or 3, **characterised in that** the slides (14) are provided near the ends with means, such as a raised lip (16) or a stop boss, which serve to permit swinging of the side walls up to a desired swing outwards.

5. Roller container according to one of the claims 1, 2, 3 or 4, **characterised in that** the supporting means comprise an approximately rectangular bottom panel (17), of which one of the sides is fixed so that it pivots (18) about a horizontal axis near the bottom side of the smaller of the hinged side wall parts (9).

6. Roller container according to claim 5, **characterised in that** the side of the bottom panel lying opposite the hinged side is provided with means such as a stop boss (20) which does not allow the second hinged side wall (10) to turn further outward than the desired maximum position.

7. Roller container according to claim 2, 3, 4, 5 or 6, **characterised in that** the supporting means comprise an approximately rectangular bottom panel (21) which is fixed so that it pivots about a horizontal axis parallel to the rear wall (5) at the top side of the A-frame, and the hinges are placed in such a way that when the two hinged side wall parts (9, 10) are placed in the nested position the bottom panel (21) can be flapped up into a vertical position and placed in front of the two hinged side wall parts (9, 10).

8. Roller container according to one of the claims 2, 3, 4, 5, 6 or 7, **characterized in that** when the bottom panel (21) is flapped down it is provided on either side with means, such as a stop boss (19, 20), to ensure that the two side wall parts cannot be turned outside the bottom panel.

Fig:1

Fig:2

*Fig: 3*

*Fig: 4*

Fig:5

Fig:6

**European Patent Office**

# EUROPEAN SEARCH REPORT

Application Number

**EP 91 20 2207**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,D | US-A-3 840 242 (F. G. CRAIG)<br>– – – | 1,7,8 | B 62 B 3/00 |
| A,D | US-A-3 840 242 (* abstract; figures *)<br>– – – | 5,6 | |
| A | GB-A-2 149 361 (C. J. MITCHELL)<br>* page 1, line 55 - page 1, line 96; figure 1 * *<br>– – – – – | 1,5,6 | |

|  |
|---|
| **TECHNICAL FIELDS SEARCHED (Int. Cl.5)** |
| B 62 B |

The present search report has been drawn up for all claims

| Place of search | Date of completion of search | Examiner |
|---|---|---|
| The Hague | 17 December 91 | FRANKS B.G. |

CATEGORY OF CITED DOCUMENTS
X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons

& : member of the same patent family, corresponding
document